# EUROPÄISCHE PATENTSCHRIFT

(11) **EP 1 433 650 B1**
(45) Veröffentlichungstag und Bekanntmachung des Hinweises auf die Patenterteilung: **30.01.2008**
(21) Anmeldenummer: 03027464.1
(22) Anmeldetag: 01.12.2003
(51) Int. Cl.: B60L 3/00, B60L 3/04

(54) **Vorrichtung zum Erden eines Eisenbahnfahrzeugs**
Device for grounding a rail vehicle
Dispositif de mise à terre d'un véhicule ferroviaire

(30) Priorität: 05.12.2002 DE 10256975
(43) Veröffentlichungstag der Anmeldung: 30.06.2004
(73) Patentinhaber: SIEMENS AKTIENGESELLSCHAFT, 80333 München (DE)
(72) Erfinder: Dirauf, Michael, 96231 Bad Staffelstein (DE); Geiling, Jürgen, 96163 Gundelsheim (DE); Kreuzer, Wolfgang, 91056 Erlangen (DE)

(56) Entgegenhaltungen:
- EP-A- 0 826 547
- DE-C- 870 428
- DE-C- 881 674
- US-A- 4 792 703

## Beschreibung

Die Erfindung betrifft eine Vorrichtung zum Erden eines Eisenbahnfahrzeugs, wobei zwischen Wagenkasten und mindestens einem Rad eine elektrisch leitende Verbindung besteht.

Bei einem elektrisch angetriebenen Zug fließt der Strom vom Fahrdraht über den Transformator oder Umrichter und mindestens ein Rad in die Schienen. Infolge eines Kurzschlusses oder eines anderen Fehlers kann ein Strom durch den Wagenkasten fließen. Um diesen abzuleiten, sind elektrische Verbindungen zwischen Wagenkasten und Rädern üblich.

Durch diese leitenden Verbindungen können jedoch Rückströme, die z.B. von anderen Zügen ausgehend durch die Schienen fließen in die Wagenkästen gelangen. Um diese Ströme von der Schiene in die Wagenkästen klein zu halten, sind bisher Schutzwiderstände eingesetzt worden.

Da es bisher üblich war, einzelne Eisenbahnwagen zu erden, wurden bisher sehr viele Schutzwiderstände benötigt.

Durch das Erden jedes einzelnen Eisenbahnwagens und insbesondere durch den Einbau zahlreicher Schutzwiderstände, steigen die Herstellungskosten und es steigt vor allem der Wartungsaufwand für ein Eisenbahnfahrzeug.

Der Erfindung liegt die Aufgabe zugrunde, eine Vorrichtung zum Erden eines Eisenbahnfahrzeuges anzugeben, die ohne aufwendige Wartungsarbeiten auskommt. Auch sollen die Kosten für eine solche Vorrichtung niedriger sein als für vergleichbare ältere Vorrichtungen.

Die Aufgabe wird gemäß der Erfindung dadurch gelöst, dass das Eisenbahnfahrzeug ein Triebzug ist, dass an mindestens einem Wagen des Triebzuges keine elektrisch leitende Verbindung zwischen Wagenkasten und Rad vorhanden ist und dass Wagen des Triebzuges untereinander durch mindestens eine Erdungsleitung elektrisch leitend verbunden sind.

Da der Triebzug ein einzelnes, wenn auch langes Eisenbahnfahrzeug darstellt, muss nicht jeder Wagen geerdet sein. Man spart dadurch Bauteile, nämlich Erdungsleitungen und Kontakte und insbesondere Schutzwiderstände. Man erzielt trotzdem eine gute Erdung des gesamten Eisenbahnfahrzeuges, da ein Strom vom Wagenkasten eines nicht geerdeten Wagens in einfacher Weise über die Erdungsleitung zu einem angekoppelten geerdeten Wagen fließt und von dort in die Schiene gelangt.

Längsströme durch die Wagenkästen der fest miteinander gekuppelten Wagen des Triebzuges, die auf einen Kurzschluss oder einen anderen Fehler zurückzuführen sind, können, da sie relativ kurzzeitig anstehen, akzeptiert werden.

Zur Vermeidung hoher Rückströme aus der Schiene in die Wagenkästen war es bisher üblich, dass die elektrisch leitenden Verbindungen zwischen Wagenkasten und Rad Schutzwiderstände aufwiesen.

Vorteilhafterweise ist jedoch nicht nur an einem Wagen des Triebzuges keine elektrisch leitende Verbindung zwischen Wagenkasten und Rad vorhanden, sondern es fehlt eine solche Verbindung an den meisten Wagen. Es kann sogar nur an einem einzelnen Wagen nur eine Verbindung zwischen Wagenkasten und Rad existieren. Um existierende Vorschriften einzuhalten werden in der Regel zwei solche Verbindungen existieren.

Es wird der Vorteil erzielt, dass man mit besonders wenigen Bauteilen auskommt.

Beispielsweise sind nur an zwei benachbarten Wagen des Triebzuges elektrisch leitende Verbindungen zwischen Wagenkasten und Rad vorhanden. Es hat sich nämlich herausgestellt, dass vorteilhafterweise nur eine relativ kleine Zahl der Wagen des Triebzuges geerdet sein müssen, um die gewünschte Sicherheit zu erzielen. Mit der Auswahl von zwei benachbarten Wagen wird insbesondere der Vorteil erzielt, dass für Rückströme aus der Schiene in die Wagenkästen kein Stromweg über einen langen Abschnitt des Zuges aufgebaut wird. Man kann daher vorteilhafterweise sogar ohne Schutzwiderstände in den elektrisch leitenden Verbindungen zwischen Wagenkästen einerseits und Rädern andererseits auskommen.

Beispielsweise befinden sich die benachbarten Wagen im mittleren Bereich des Triebzuges.

Beispielsweise haben zwei Räder, die jeweils über eine elektrisch leitende Verbindung mit einem Wagenkasten verbunden sind, in Längsrichtung des Triebzuges einen kleinen Abstand voneinander in Vergleich zur Länge des Triebzuges.

Damit wird der Vorteil erzielt, dass, obwohl zwei leitende Verbindungen nach den Vorschriften erforderlich sind, Rückströme aus der Schiene nur über eine sehr kurze Distanz im Wagenkasten fließen können, wodurch gegebenenfalls auf Schutzwiderstände ganz verzichtet werden kann.

Beispielsweise sieht die Vorrichtung vor, dass sich die beiden Räder in unterschiedlichen Drehgestellen befinden. Damit wird vorteilhafterweise eine Erdung auch bei einem Defekt an einem Drehgestell sichergestellt.

Eine Bugkupplung des Triebzuges ist beispielsweise elektrisch isoliert gehalten und über eine Kupplungserdleitung, in die ein Schutzwiderstand eingefügt ist, mit einem geerdeten Teil des Triebzuges verbunden.

Mit dieser, bei Triebzügen sinnvollen Anordnung wird verhindert, dass für den Fall, dass mehrere Triebzüge aneinandergekoppelt sind, Rückströme von einem Triebzug in den anderen gelangen können.

Beispielsweise umfasst ein Teil des Triebzuges, das einzeln abstellbar oder transportierbar ist, eine Einrichtung zum temporären Erden. Diese Einrichtung wird nur aktiviert, wenn wider Erwarten ein Teil des sonst stets im Verband fahrenden Triebzuges, z.B. für Wartungsarbeiten abgetrennt sein sollte.

Eine leitende Verbindung ist dann beispielsweise zwischen dem Wagenkasten einerseits und einem Rad und/oder der Bahnerde (Schiene) temporär installierbar.

Mit der Vorrichtung nach der Erfindung wird insbesondere der Vorteil erzielt, dass gezielt für einen Triebzug, der ein langes in der Regel nicht zu trennendes Eisenbahnfahrzeug ist, eine zuverlässige und kostengünstige Vorrichtung zum Erden bereitgestellt ist. Es ist dabei sichergestellt, dass unerwünschte Potentiale vom Wagenkasten abfließen, während störende Rückströme, die von der Schiene aus in das Eisenbahnfahrzeug gelangen könnten, weitgehend vom Wagenkasten ferngehalten werden. Der Einsatz aufwendiger Schutzwiderstände wird minimiert.

## Patentansprüche

1. Vorrichtung zum Erden eines Eisenbahnfahrzeugs, wobei zwischen Wagenkasten und mindestens einem Rad eine elektrisch leitende Verbindung besteht,
**dadurch gekennzeichnet,**
**dass** das Eisenbahnfahrzeug ein Triebzug ist, dass an mindestens einem Wagen des Triebzuges keine elektrisch leitende Verbindung zwischen Wagenkasten und Rad vorhanden ist und dass Wagen des Triebzuges untereinander durch mindestens eine Erdungsleitung elektrisch leitend verbunden sind.

2. Vorrichtung nach Anspruch 1,
**dadurch gekennzeichnet,**
**dass** nur an zwei benachbarten Wagen des Triebzuges elektrisch leitende Verbindungen zwischen Wagenkasten und Rad vorhanden sind.

3. Vorrichtung nach Anspruch 2,
**dadurch gekennzeichnet, dass** sich die benachbarten Wagen im mittleren Bereich des Triebzuges befinden.

4. Vorrichtung nach einem der Ansprüche 1 bis 3,
**dadurch gekennzeichnet,**
**dass** zwei Räder, die jeweils über eine elektrisch leitende Verbindung mit einem Wagenkasten verbunden sind, in Längsrichtung des Triebzuges einen kleinen Abstand voneinander im Vergleich zur Länge des Triebzuges haben.

5. Vorrichtung nach Anspruch 4,
**dadurch gekennzeichnet,**
**dass** sich die beiden Räder in unterschiedlichen Drehgestellen befinden.

6. Vorrichtung nach einem der Ansprüche 1 bis 5,
**dadurch gekennzeichnet, dass** eine Bugkupplung des Triebzuges elektrisch isoliert gehalten und über eine Kupplungserdleitung, in die ein Schutzwiderstand eingefügt ist, mit einem geerdeten Teil des Triebzuges verbunden ist.

7. Vorrichtung nach einem der Ansprüche 1 bis 6,
**dadurch gekennzeichnet,**
**dass** ein Teil des Triebzuges, das einzeln abstellbar oder transportierbar ist, eine Einrichtung zum temporären Erden umfasst.

8. Vorrichtung nach Anspruch 7,
**dadurch gekennzeichnet,**
**dass** eine leitende Verbindung zwischen Wagenkasten und Rad und/oder der Bahnerde (Schiene) temporär installierbar ist.

## Claims

1. Device for earthing a railway vehicle, wherein there is an electrically conductive connection between the wagon body and at least one wheel, **characterized in that** the railway vehicle is a tractive unit, **in that** there is no electrically conductive connection between the wagon body and the wheel on at least one wagon of the tractive unit, and **in that** the wagons of the tractive unit are electrically conductively connected to one another by means of at least one earthing line.

2. Device according to Claim 1, **characterized in that** there are electrically conductive connections between the wagon body and wheel only at two adjacent wagons of the tractive unit.

3. Device according to Claim 2, **characterized in that** the adjacent wagons are located in the central region of the tractive unit.

4. Device according to one of Claims 1 to 3, **characterized in that** two wheels which are each connected to a wagon body by means of an electrically conductive connection are at a small distance from one another in the longitudinal direction of the tractive unit compared to the length of the tractive unit.

5. Device according to Claim 4, **characterized in that** the two wheels are on different bogies.

6. Device according to one of Claims 1 to 5, **characterized in that** a coupling on the front part of the tractive unit is kept electrically insulated and is connected to an earthed part of the tractive unit by means of a coupling earthing line into which a protective resistor is inserted.

7. Device according to one of Claims 1 to 6, **characterized in that** part of the tractive unit which can be side-tracked or transported individually comprises a device for temporary earthing.

8. Device according to Claim 7, **characterized in that** a conductive connection between the wagon body and wheel and/or the railway earth (rail) can be installed temporarily.

## Revendications

1. Dispositif de mise à la terre d'un véhicule ferroviaire dans lequel il y a une liaison électrique entre une caisse et au moins une roue,
**caractérisé**
**en ce que** le véhicule ferroviaire est une rame automotrice, en ce qu'au moins sur un wagon de la rame automotrice il n'y a pas de liaison conductrice d'électricité entre des caisses et la roue et en ce que des wagons de la rame automotrice sont reliés entre eux d'une manière conductrice d'électricité par au moins une ligne de mise à la terre.

2. Dispositif suivant la revendication 1,
**caractérisé**
**en ce qu'**il n'y a de liaison conductrice de l'électricité entre des caisses et la roue que sur deux wagons voisins de la rame automotrice.

3. Dispositif suivant la revendication 2,
**caractérisé**
**en ce que** les wagons voisins se trouvent dans la partie de milieu de la rame automotrice.

4. Dispositif suivant l'une des revendications 1 à 3,
**caractérisé**
**en ce que** deux roues qui sont reliées respectivement par une liaison conductrice de l'électricité à une caisse sont dans la direction longitudinale de la rame automotrice à une distance mutuelle plus petite que la longueur de la rame automotrice.

5. Dispositif suivant la revendication 4,
**caractérisé**
**en ce que** les deux roues se trouvent dans des boggies différents.

6. Dispositif suivant l'une des revendications 1 à 5,
**caractérisé**
**en ce qu'**un couplage avant de la rame automotrice est maintenu isolé électriquement et est relié à une partie mise à la terre de la rame automotrice par une ligne de mise à la terre de couplage, dans laquelle est insérée une résistance de protection.

7. Dispositif suivant l'une des revendications 1 à 6,
**caractérisé**
**en ce qu'**une partie de la rame automotrice, qui peut être garée ou transportée, comprend un dispositif de mise à la terre temporaire.

8. Dispositif suivant la revendication 7,
**caractérisé**
**en ce qu'**une ligne conductrice peut être installée temporairement entre caisse et roue et/ou la terre de voie (rail).
